# EUROPÄISCHE PATENTSCHRIFT

(11) **EP 4 568 767 B1**
(45) Veröffentlichungstag und Bekanntmachung des Hinweises auf die Patenterteilung: **31.12.2025**
(21) Anmeldenummer: 23768482.4
(22) Anmeldetag: 04.09.2023
(51) Int. Cl.: B01D 35/02, B01D 29/90, B01D 29/33, F16K 31/00

(54) **VORRICHTUNG UND VERFAHREN ZUR FILTERUNG VON FLÜSSIGKEITEN, INSBESONDERE IN FÜLLVENTILEN**
DEVICE AND METHOD FOR FILTERING LIQUIDS, IN PARTICULAR IN FILLING VALVES
DISPOSITIF ET PROCÉDÉ DE FILTRATION DE LIQUIDES, EN PARTICULIER DANS DES VANNES DE REMPLISSAGE

(30) Priorität: 02.12.2022 DE 102022132097
(43) Veröffentlichungstag der Anmeldung: 18.06.2025
(73) Patentinhaber: Sanitärtechnik Eisenberg GmbH, 07607 Eisenberg/Thür. (DE)
(72) Erfinder: LANG, Torsten, 07743 Jena (DE); MÜCKE, Bernhard, 07607 Eisenberg (DE); HILDEBRANDT, Jan, 07646 Stadtroda (DE); HAGEMEIER, Thomas, 07607 Eisenberg (DE)
(74) Vertreter: Hecht, Jan-David
(86) Internationale Anmeldenummer: PCT/EP2023/074201
(87) Internationale Veröffentlichungsnummer: WO 2024/114967

(56) Entgegenhaltungen:
- CN-A- 112 393 012
- CN-A- 113 339 534
- US-B1- 6 827 911

## Beschreibung

Die vorliegende Erfindung betrifft eine Vorrichtung zur Filterung von Flüssigkeiten, insbesondere in Füllventilen, nach dem Oberbegriff von Anspruch 1 und ein Verfahren zur Filterung von Flüssigkeiten, insbesondere in Füllventilen, nach dem Oberbegriff von Anspruch 13.

Füllventile kommen vor allem bei der Befüllung von Spülkästen in Sanitäreinrichtungen, insbesondere für WCs zum Einsatz. Beispielsweise ist ein solches Füllventil in der EP 1 862 604 B1 beschrieben, von dem die vorliegende Erfindung ausgeht.

Das dabei eingesetzte Spülmittel ist zumeist Wasser aus Trinkwasserleitungen, es könnte allerdings auch Brauchwasser, insbesondere sogenanntes Grauwasser verwendet werden, das ein fäkalienfreies, gering verschmutztes Abwasser aus Bädern, Duschen oder Waschmaschinen ist, dass ggf. auch nach vorheriger Aufbereitung einer Zweitnutzung als Brauch- bzw. Betriebswasser dienen kann.

Sowohl das Wasser aus Trinkwasserleitungen als auch Brauchwasser können mehr oder weniger verunreinigt sein, weshalb heutzutage die meisten Füllventile mit Filtervorrichtungen versehen sind, damit eine Verschmutz und ggf. Unbrauchbarwerdung dieser Füllventile verhindert wird. Im Rahmen der EP 1 862 604 B1 könnte eine solche Filtervorrichtung beispielsweise im Bereich des Anschlusses bzw. des Anschlusskörpers eingesetzt sein, wobei der Anschlusskörper vorzugsweise zumindest als Teil der Filtervorrichtung ausgebildet sein könnte.

Solche Filtervorrichtungen für Flüssigkeiten können allerdings nicht nur in Füllventilen, sondern vorteilhaft auch in anderen Flüssigkeitsführenden Leitungen verwendet werden. Eine Anwendung im Zusammenhang mit Druckspülern für Urinale ist ebenfalls möglich.

Problematisch bei solchen Filtervorrichtungen ist es jedoch, dass diese sich mit der Zeit zusetzen können, so dass die entsprechenden Anlagen, wie das Füllventil regelmäßiger Wartung unterzogen werden müssen. Außerdem ist es nachteilig, dass der Volumenstrom durch eine solche Filtervorrichtung aufgrund des durch sie erzeugten Widerstands für die Flüssigkeitsströmung herabgesetzt wird.

Aus der US 6 827 911 B1 ist ein Photoreaktor bekannt, dessen Flüssigkeit in einem Kreislauf bewegt wird, wobei ein Außenzylinder, ein koaxial innerhalb des Außenzylinders angeordneter Innenzylinder, eine Einlasskammer oben und eine Flotationskammer unten bestehen und der Ringraum zwischen dem Innen- und dem Außenzylinder eine Reaktionszone bildet. Der Innenraum des Innenzylinders umfasst eine Katalysatorrückgewinnungskammer.

Aus der CN 113 339 534 A beschreibt ein Verschlussventil für eine Wasserleitung die einen zylindrischen Filter aufweist.

Die CN 112 393 012 A beschreibt ein selbstreinigendes Durchgangsventil, in dem zwei Filterelemente vor einer Durchgangsbohrung angeordnet sind, wobei die Durchgangsbohrung durch ein Verschlusselement verschlossen werden kann.

Es ist daher Aufgabe der vorliegenden Erfindung, eine Lösung zu schaffen, die hier Verbesserungen bringt. Bevorzugt soll die Filtervorrichtung sich weniger zusetzen als bisher bekannte Filtervorrichtungen. Insbesondere soll die Filtervorrichtung den Volumenstrom nur geringer beeinträchtigen, vorzugsweise nicht reduzieren.

Diese Aufgabe wird gelöst mit der erfindungsgemäßen Vorrichtung nach Anspruch 1, dem erfindungsgemäßen Verfahren nach Anspruch 13 und der erfindungsgemäßen Verwendung nach Anspruch 15. Vorteilhafte Weiterbildungen sind in den abhängigen Ansprüchen und in der nachfolgenden Beschreibung zusammen mit den Figuren angegeben.

Erfinderseits wurde erkannt, dass diese Aufgabe in überraschender Art und Weise dadurch besonders einfach gelöst werden kann, wenn die Filtervorrichtung so ausgebildet ist, dass eine Axialströmung innerhalb der Filtervorrichtung zumindest teilweise nach außen abgelenkt wird, insbesondere in eine Umfangsströmung umgelenkt wird. Dadurch entstehen Zentrifugalkräfte, die dazu führen, dass Schmutzpartikel nach außen in Richtung zu einer Wandung eines Filterraumes abgelenkt werden, so dass sich ein Filterelement der Filtervorrichtung weniger stark zusetzt und dadurch auch der Volumenstrom durch die Filtervorrichtung sich aufgrund eines Zusetzens nicht so stark reduziert. Es wird somit eine hydraulische Filterung bewirkt, während das Filterelement selbst mit seinen Durchgangsöffnungen eine mechanische Filterung bewirkt. Durch diese Kombination ist die Filterung besonders wirksam. Vorzugsweise wird die Filtervorrichtung bei Füllventilen verwendet.

Wenn im Folgenden von "Strömungsrichtung" gesprochen wird, meint dies eine grobe Richtung von einem Filterzulauf zu einem Filterablauf. "Strömung" meint dagegen lokal konkrete Fließrichtungen.

Wenn im Folgenden von "axial", "Umfang" und "Ring" gesprochen wird, können nicht nur rotationssymmetrische, also im Querschnitt runde Gestaltungen beschrieben sein, sondern auch jegliche anderen Querschnitte, wie ovale, rechteckige, mehreckige und so weiter. Eine Beschränkung auf runde Querschnitte soll damit also nicht verbunden sein.

Die erfindungsgemäße Vorrichtung zur Filterung von Flüssigkeiten, insbesondere in Füllventilen, mit einem Filterraum, der einen Filterzulauf, einen Filterablauf, eine zwischen Filterzulauf und Filterablauf angeordnete Wandung des Filterraumes und eine Längserstreckung aufweist, wobei ein Filterelement mit zumindest einer Durchgangsöffnung für eine zu filternde Flüssigkeit besteht, das in Strömungsrichtung zwischen Filterzulauf und Filterablauf in dem Filterraum angeordnet ist, ist dadurch gekennzeichnet, dass in dem Filterraum Mittel zur Strömungsbeeinflussung bestehen, die angepasst sind, die Flüssigkeit in Bezug auf die Längserstreckung des Filterraumes nach außen abzulenken.

In einer vorteilhaften Weiterbildung ist vorgesehen, dass das Filterelement in Bezug auf die Längserstreckung gewölbt, bevorzugt konisch gewölbt, insbesondere als Kegel oder Kegelstumpf ausgebildet ist, wobei die Wölbung vorzugsweise in Richtung zum Filterzulauf verläuft. Dann wird zum einen eine besonders große Filterfläche in Bezug auf den Querschnitt des Filterraumes bereitgestellt und zum anderen hilft das Filterelement bei der Umlenkung der Strömung.

In einer vorteilhaften Weiterbildung ist vorgesehen, dass das Filterelement in Bezug auf die Längserstreckung einen Winkel seiner Kegelfläche im Bereich 5° bis 20°, bevorzugt 10° bis 17° und insbesondere von 15° aufweist. Dann besteht einerseits ein gutes Führungsvermögen durch Vermeidung von Strömungsabrissen für die Strömung und andererseits baut das Filterelement nicht zu lang, so dass der Bauraum gering gehalten werden kann.

In einer vorteilhaften Weiterbildung ist vorgesehen, dass das Filterelement eine Zulaufseite und eine Ablaufseite aufweist und an der Ablaufseite ein Strahlführungselement, bevorzugt ein Stab angeordnet ist. Dadurch wird die Strömung auf der Ablaufseite laminarisiert, weil ein Aufeinanderprallen von Teilströmen verhindert wird und diesen Teilströmen eine axiale Führung in Richtung der Ablaufseite gegeben wird. Dieses Strahlführungselement ist beispielsweise axial und bevorzugt in Längserstreckung verlaufend angeordnet. Vorzugsweise kann das Strahlführungselement als Stabelement ausgebildet sein, dass sich im Inneren des Filterelements von einer Spitze des Filterelements in Richtung zu dem Filterablauf erstreckt.

In einer vorteilhaften Weiterbildung ist vorgesehen, dass das Filterelement zumindest eine Durchgangsöffnung aufweist, die so ausgerichtet ist, dass sie nicht parallel zur Längserstreckung des Filterraumes verläuft, wobei die Durchgangsöffnung bevorzugt so ausgebildet ist, dass kein Strahl parallel zur Längserstreckung durch diese Durchgangsöffnung hindurchtreten kann ohne auf eine Wandung des Filterelements zu treffen. Dann wird ein Zusetzen der Durchgangsöffnungen und damit des Filterelements noch wirksamer verhindert, weil die Flüssigkeit gezwungen wird, an den Durchgangsöffnungen vorbeizufließen, weshalb es immer wieder zu einer Selbstreinigung der Durchgangsöffnungen durch die Flüssigkeit kommt.

In einer vorteilhaften Weiterbildung ist vorgesehen, dass die Summe der Querschnittsflächen der Durchgangsöffnungen des Filterelements zumindest gleich, bevorzugt größer ist als die Querschnittsfläche des Filterzulaufs. Dadurch stellt die Filtervorrichtung keinen Strömungswiderstand für die Flüssigkeit dar, so dass insbesondere damit versehene Füllventile für eine sehr schnelle Befüllung von entsprechenden Spülkästen sorgen können.

In einer vorteilhaften Weiterbildung ist vorgesehen, dass das Filterelement zumindest eine in seiner Dimension anpassbare Durchgangsöffnung aufweist, wobei das Filterelement bevorzugt zwei gegeneinander verlagerbare Teile aufweist, die jeweils eine Durchgangsöffnung aufweisen, wobei eine Verlagerung der Teile gegeneinander zu einer Verlagerung der Position der Durchgangsöffnungen der Teile zueinander führt. Dadurch kann der Volumenstrom durch die Filtervorrichtung gezielt an konkrete Bedürfnisse angepasst werden. Beispielsweise könnte das Filterelement aus einer in Bezug auf den Filterraum festen Teil bestehen und einem gegenüber diesem Teil verdrehbaren Teil, wobei beide Teile Durchgangsöffnungen aufweisen, die in Deckung bringbar sind, wobei eine Verdrehung diese Deckung zumindest teilweise aufhebt, so dass die effektive Durchgangsöffnungsquerschnitte entsprechend reduziert bzw. ganz entfernt werden. Diese beiden Teile könnten vorzugsweise kegelförmig ausgebildet sein.

In einer vorteilhaften Weiterbildung ist vorgesehen, dass die Durchgangsöffnungen des Filterelements in einem ersten minimalen Abstand von der Wandung des Filterraumes und/oder in einem zweiten minimalen Abstand von dem Filterablauf angeordnet sind, wobei der erste minimale Abstand und/oder der zweite minimale Abstand bevorzugt zumindest 3 mm, vorzugsweise zumindest 5 mm, insbesondere zumindest 10 mm beträgt. "Minimaler Abstand" bedeutet, dass Durchgangsöffnungen zwar in einem größeren Abstand angeordnet sein können, jedoch nicht in einem geringeren Abstand. Dadurch wird in Bezug auf die Strömungsrichtung ein Totraum gebildet, aus dem Flüssigkeit nicht ohne Weiteres abfließen kann ohne beispielsweise entgegen der Strömungsrichtung zu fließen. Dadurch können sich in diesem Totraum Verschmutzungen ansammeln, so dass ein Zusetzen des Filterelements noch besser verhindert wird. Dieser Totraum ist allerdings ausreichend klein, damit möglichst wenig Strömungswiderstand erzeugt wird.

Erfindungsgemäß ist vorgesehen, dass in Bezug auf die Längserstreckung des Filterraumes ein Bereich des Filterraumes besteht, der zwischen der Wandung des Filterraumes und dem Filterelement angeordnet ist und der keine Durchgangsöffnungen aufweist. Dann können sich dort Verschmutzungen sehr gut ansammeln, so dass ein Zusetzen des Filterelements noch besser verhindert wird, weil dieser Bereich strömungstechnisch günstig liegt, um nur eine geringe Strömungsgeschwindigkeit zuzulassen.

In einer vorteilhaften Weiterbildung ist vorgesehen, dass in Bezug auf die Längserstreckung des Filterraumes ein Bereich des Filterraumes besteht, der in Bezug auf die Strömungsrichtung als Totraum ausgebildet ist. Dadurch können sich in diesem Totraum Verschmutzungen ansammeln, so dass ein Zusetzen des Filterelements noch besser verhindert wird.

In einer vorteilhaften Weiterbildung ist vorgesehen, dass der Totraum ein Volumen von zumindest 700 mm3, bevorzugt von zumindest 1.000 mm3, insbesondere von zumindest 1.200 mm3 aufweist. Dann besteht ein ausreichend großer Raum für die Sammlung von Verschmutzungen.

Alternativ oder zusätzlich kann vorgesehen sein, dass der Bereich als Vertiefung ohne Durchgangsöffnungen ausgebildet ist. Dann können sich in der Vertiefung Verschmutzungen ansammeln, so dass ein Zusetzen des Filterelements noch besser verhindert wird.

Alternativ oder zusätzlich kann vorgesehen sein, dass der Bereich als Ringraum oder Ringspalt ohne Durchgangsöffnungen ausgebildet ist. Dann können sich in dem Ringraum bzw. Ringspalt Verschmutzungen ansammeln, so dass ein Zusetzen des Filterelements noch besser verhindert wird. Wenn der Ringraum oder Ringspalt zumindest bereichsweise in Bezug auf eine Richtung quer zur Längserstreckung des Filterraumes außerhalb des Querschnitts des Filterablaufs angeordnet ist, entsteht ein Totraum, in dem besonders wenig Strömungsgeschwindigkeit vorliegt, so dass sich dort Verschmutzungen besonders leicht ansammeln können.

Alternativ oder zusätzlich kann vorgesehen sein, dass der Bereich eine Eintrittsöffnung aufweist, die einen geringeren Querschnitt aufweist als in Bezug auf die Längserstreckung hinter der Eintrittsöffnung liegende Abschnitte des Bereichs. Vorzugsweise ist die Eintrittsöffnung als Spalt ausgebildet. Dadurch kann der Totraum besonders wirksam Verschmutzungen sammeln, ohne sie an die zu filternde Flüssigkeit wieder abzugeben.

Alternativ oder zusätzlich kann vorgesehen sein, dass der Bereich eine Eintrittsöffnung aufweist, wobei sich in Längserstreckung die Querschnittsfläche des Bereichs in Bezug auf die Querschnittsfläche der Eintrittsöffnung erweitert. Auch dadurch kann der Totraum besonders wirksam Verschmutzungen sammeln, ohne sie an die zu filternde Flüssigkeit wieder abzugeben.

In einer vorteilhaften Weiterbildung ist vorgesehen, dass der Bereich in Längserstreckung des Filterraumes eine Tiefe von zumindest 3 mm, vorzugsweise von zumindest 5 mm, insbesondere von zumindest 10 mm aufweist. Dadurch besteht ein einerseits ausreichend großer Bereich für die Aufnahme von Verschmutzungen, andererseits wird aber möglichst wenig Strömungswiderstand erzeugt.

In einer vorteilhaften Weiterbildung ist vorgesehen, dass der Bereich quer zur Längserstreckung des Filterraumes eine Breite von zumindest 3 mm, vorzugsweise von zumindest 5 mm, insbesondere von zumindest 10 mm aufweist. Dadurch besteht ein einerseits ausreichend großer Bereich für die Aufnahme von Verschmutzungen, andererseits wird aber möglichst wenig Strömungswiderstand erzeugt.

In einer vorteilhaften Weiterbildung ist vorgesehen, dass die Eintrittsöffnung des Bereichs eine Breite von höchstens 6 mm, bevorzugt von höchstens 3 mm, insbesondere von höchstens 1 mm aufweist. Dadurch besteht eine Verengung gegenüber dem Totraum, so dass der Totraum besonders wirksam Verschmutzungen sammeln kann, ohne sie an die zu filternde Flüssigkeit wieder abzugeben.

Die angegebenen Breiten des Bereichs und der Eintrittsöffnung sind radiale Breiten, also in Bezug auf die Mittelachse des Filterelements nur einseitig gemessen.

In einer vorteilhaften Weiterbildung ist vorgesehen, dass die Mittel zur Strömungsbeeinflussung angepasst sind, eine Axialströmung zumindest teilweise in eine Umfangsströmung umzuformen. Dann ist die hydraulische Filterung aufgrund von Zentrifugalkräften besonders wirksam.

In einer vorteilhaften Weiterbildung ist vorgesehen, dass die Mittel zur Strömungsbeeinflussung zumindest einen Vorsprung umfassen, der in Bezug auf die Längserstreckung des Filterraumes zumindest bereichsweise gewunden ausgebildet ist.

Alternativ oder zusätzlich kann vorgesehen sein, dass der zumindest eine Vorsprung sich mit seiner Höhe zwischen Filterelement und Wandung des Filterraumes erstreckt, bevorzugt bis auf fertigungsbedingte Toleranzen sowohl an Wandung des Filterraumes als auch dem Filterelement anliegt. Dann ist die Strömungsumlenkung besonders wirksam, so dass die hydraulische Filterwirkung besonders groß ist.

Alternativ oder zusätzlich kann vorgesehen sein, dass der zumindest eine Vorsprung fest mit der Wandung und/oder fest mit dem Filterelement verbunden ist. Dadurch lässt sich die Vorrichtung besonders gut herstellen, wobei eine hervorragende Filterwirkung ermöglicht wird.

In einer vorteilhaften Weiterbildung ist vorgesehen, dass der zumindest eine Vorsprung ggf. in Zusammenwirkung mit weiteren Vorsprüngen so angeordnet ist, dass keine direkte Strömung in Richtung der Längserstreckung des Filterraumes möglich ist, sondern die gesamte Strömung in Bezug auf die Längserstreckung einen Drall erfährt. Dadurch wird ein axialer Durchtritt der Strömung in Richtung der Längserstreckung wirksam verhindert und so wird eine vollständige Umlenkung der Strömung bewirkt.

Die vorgenannten Vorsprünge wirken als Strömungsleitelemente. Es könnte sich beispielsweise um nur einen Vorsprung handeln, der sich mindestens einmal um die Längserstreckung des Filterraumes herumwindet. Andererseits könnte es sich auch um zwei, drei oder noch mehr Vorsprünge handeln, die so angeordnet sind, dass sich gemeinsam zumindest einmal um die Längserstreckung des Filterraumes herumwinden. Bevorzugt sind die mehreren Vorsprünge so angeordnet, dass sie sich in Blickrichtung der Längserstreckung des Filterraumes zumindest bereichsweise überlappen.

In einer vorteilhaften Weiterbildung ist vorgesehen, dass der zumindest eine Vorsprung so angeordnet ist, dass er sich in Bezug auf die Längserstreckung des Filterraumes nicht über die gesamte Tiefe des vorgenannten Bereichs des Filterraumes erstreckt, bevorzugt sich nicht in diesen Bereich hinein erstreckt. Dadurch wird in diesem Bereich eine möglichst geringe Strömung erzeugt, so dass sich dort Verschmutzungen leicht ablagern können.

Unabhängiger Schutz wird beansprucht für das erfindungsgemäße Verfahren zur Filterung von Flüssigkeiten, insbesondere in Füllventilen, wobei ein Filterraum verwendet wird, der einen Filterzulauf, einen Filterablauf, eine zwischen Filterzulauf und Filterablauf angeordnete Wandung des Filterraumes und eine Längserstreckung aufweist, wobei ein Filterelement mit zumindest einer Durchgangsöffnung für eine zu filternde Flüssigkeit verwendet wird, das in Strömungsrichtung zwischen Filterzulauf und Filterablauf in dem Filterraum angeordnet ist, das dadurch gekennzeichnet ist, dass Mittel zur Strömungsbeeinflussung in dem Filterraum verwendet werden, die angepasst sind, die Flüssigkeit in Bezug auf die Längserstreckung des Filterraumes nach außen abzulenken.

In einer vorteilhaften Weiterbildung ist vorgesehen, dass die erfindungsgemäße Vorrichtung verwendet wird.

Ebenfalls unabhängiger Schutz wird beansprucht für die erfindungsgemäße Verwendung der erfindungsgemäßen Vorrichtung im Rahmen einer flüssigkeitsführenden Leitung, bevorzugt im Rahmen eines Füllventils, insbesondere im Rahmen eines Spülkastens mit einem Füllventil.

Die Merkmale und weitere Vorteile der vorliegenden Erfindung werden im Folgenden anhand der Beschreibung zweier bevorzugter Ausführungsbeispiele im Zusammenhang mit den Figuren deutlich werden. Dabei zeigen rein schematisch:
- Fig. 1: das erfindungsgemäße Füllventil mit der erfindungsgemäßen Filtervorrichtung in einer seitlichen Draufsicht,
- Fig. 2: die erfindungsgemäße Filtervorrichtung in einer Längsschnittansicht gemäß einer ersten bevorzugten Ausgestaltung,
- Fig. 3: das Filterelement der erfindungsgemäßen Filtervorrichtung nach Fig. 2 in verschiedenen Ansichten,
- Fig. 4: Mittel zur Strömungsbeeinflussung der erfindungsgemäßen Filtervorrichtung nach Fig. 2 in verschiedenen Ansichten,
- Fig. 5: das Zusammenwirken des Filterelements nach Fig. 3 und der Mittel zur Strömungsbeeinflussung nach Fig. 4,
- Fig. 6: ein erfindungsgemäßes Filterelement in verschiedenen Ansichten gemäß einer zweiten bevorzugten Ausgestaltung.

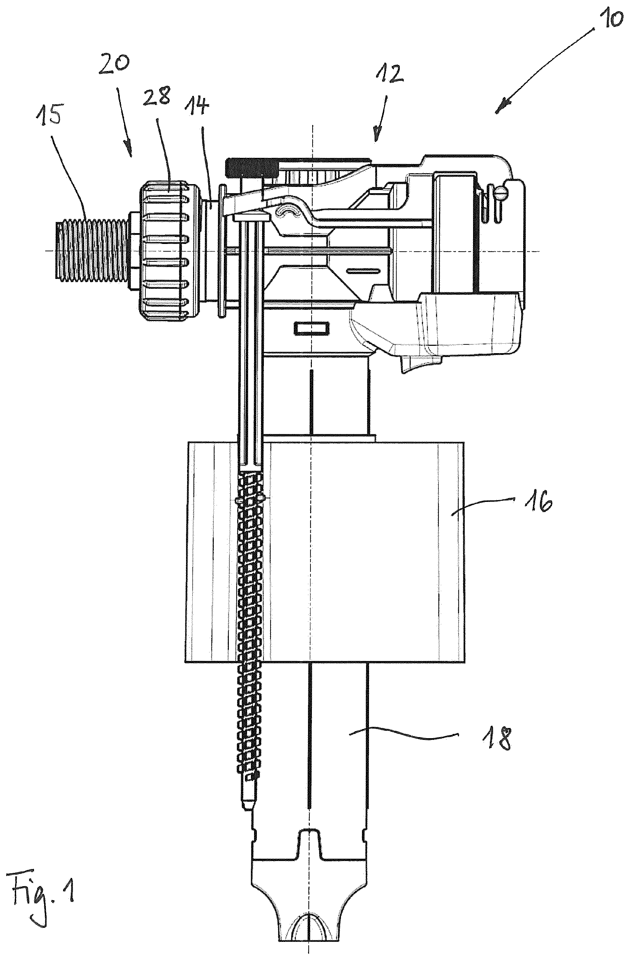

In Fig. 1 ist das erfindungsgemäße Füllventil 10 in einer Seitenansicht gezeigt. Es ist zu erkennen, dass das Füllventil 10 in üblicher Art und Weise ein Gehäuse 12, einen Zuleitungsanschluss 14 mit einem Anschlusskörper 15, einen höhenverstellbaren Schwimmkörper 16 und ein Füllrohr 18 aufweist. Bezüglich des genauen Aufbaus des Füllventils 10 wird auf die EP 1 862 604 B1, deren diesbezüglicher Inhalt vollumfänglich einbezogen wird.

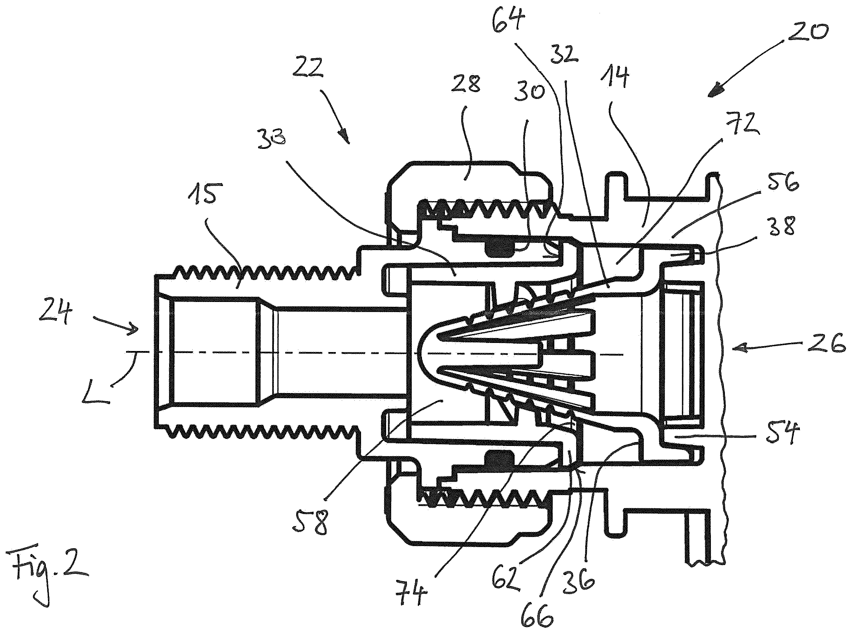

In diesem erfindungsgemäßen Füllventil 10, das beispielsweise der Befüllung von Spülkästen von WCs dienen kann, ist die erfindungsgemäße Filtervorrichtung integriert, die in den Fig. 2 bis 5 näher gezeigt ist.

In Fig. 2 ist zu erkennen, dass die erfindungsgemäße Filtervorrichtung 20 gemäß einer ersten bevorzugten Ausgestaltung ein Filtergehäuse 22 mit einer Längserstreckung L aufweist, in das der Anschlusskörper 15 integriert ist, der zugleich den Filterzulauf 24 bildet, und in das der Zuleitungsanschluss 14 integriert ist, der zugleich den Filterablauf 26 bildet. Der Zuleitungsanschluss 14 ist mit dem Anschlusskörper 15 über eine Überwurfmutter 28 verbunden und es besteht eine Abdichtung zwischen Zuleitungsanschluss 14 und Anschlusskörper 15 über eine Gummidichtung in Form eines O-Rings 30.

Der Anschlusskörper 15 ist in üblicher Weise aus einem festen Material wie Messing gefertigt, um hohe Lasten auszuhalten, während der Zuleitungsanschluss 14 und auch der Rest des Füllventils 10 aus Kunststoff gefertigt sein können.

Weitere Bestandteile der Filtervorrichtung 20 sind zum einen ein Filterelement 32 und zum anderen ein Drallkörper 33 als Mittel zur Strömungsbeeinflussung.

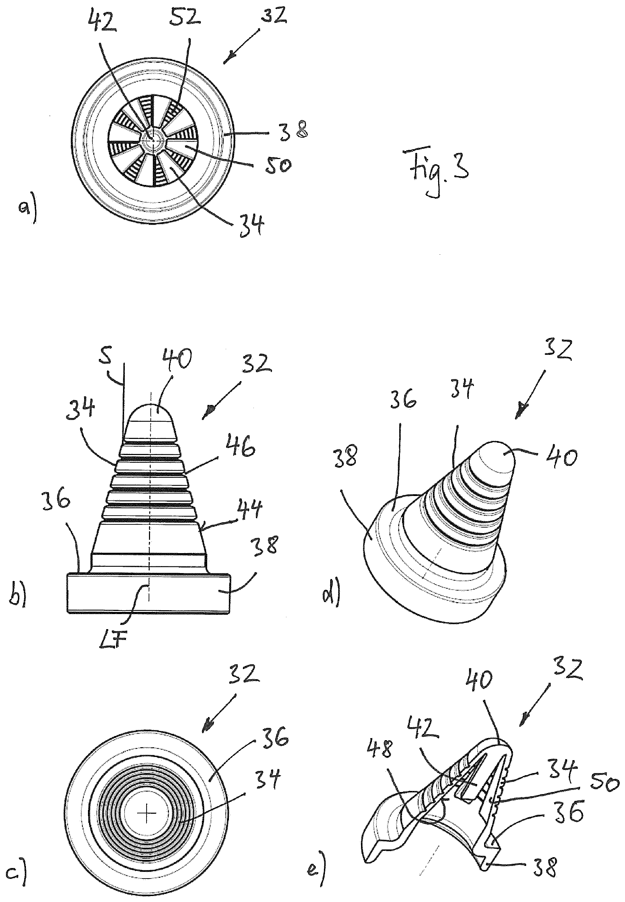

Das Filterelement 32 weist entsprechend Fig. 3 a) bis e) eine Kegelfläche 34 auf, die an einer Basisringfläche 36 angeordnet ist, wobei sich gegenüberliegend von der Kegelfläche 34 ein Kragen 38 erstreckt. Im Inneren der Kegelfläche 34 erstreckt an der Innenseite 48 der Kegelfläche 34 von der Spitze 40 der Kegelfläche 34 in Richtung der Basisringfläche 36 ein Stabelement 42. Dieses Stabelement 42 dient der einfachen Strömungsführung auf der Seite des Filterablaufs 26. Genauer gesagt wird durch das Stabelement 42 die Strömung auf der Seite des Filterablaufs 26 laminarisiert, weil ein Aufeinanderprallen von Teilströmen im Inneren des Filterelements 32 verhindert wird und diesen Teilströmen eine axiale Führung in Richtung der Seite des Filterablaufs 26 gegeben wird.

Die Kegelfläche 34 weist an Ihrer Außenseite 44 Nuten 46 auf. An der Innenseite 48 der Kegelfläche 34 sind wiederum Rippen 50 angeordnet. Durch diese Rippen 50 und die Nuten 46 werden Durchgangsöffnungen 52 definiert, weil in den Bereichen zwischen benachbarten Rippen 50 die Nuten 46 als Durchbrechungen 52 ausgebildet sind.

In einer alternativen Ausgestaltung, die nicht gesondert dargestellt wird, könnte man die Rippen 50 außen 44 und die Nuten 46 innen 48 anordnen.

Die Durchgangsöffnungen 52 liegen dabei in Bezug auf die Längserstreckung LF des Filterelements 32 so, dass kein Strahl S parallel zur Längserstreckung LF des Filterelements 32 durch die Durchgangsöffnungen 52 ungehindert hindurchtreten kann, ohne auf die Wandung der Kegelfläche 34 zu treffen (vgl. Fig. 3 b)). Der Strahl S müsste also nach innen abgelenkt werden, bevor er durch die jeweilige Durchgangsöffnung 52 hindurchtreten könnte.

Der Kragen 38 ist dafür bestimmt, einen Filtersitz 54 des Zuleitungsanschlusses 14 zu umfassen, wobei der Kragen 38 von einer Außenwand 56 des Zuleitungsanschlusses 14 umgeben und dadurch geklemmt ist. Die Basisringfläche 36 sitzt auf dem Filtersitz 54 auf.

Dadurch findet insgesamt eine Abdichtung des Filterablaufs 26 gegenüber einem Filterraum 58 statt, der zwischen dem Filterelement 32, dem Drallkörper 33 und der Außenwand 56 des Zuleitungsanschlusses 14 besteht.

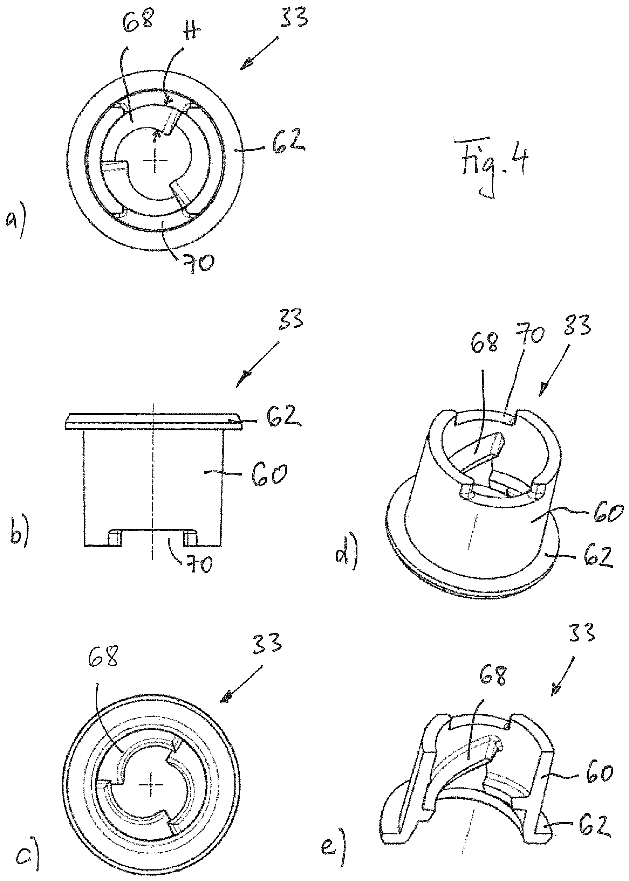

Der Drallkörper 33 weist eine zylindrische Wandung 60 auf, an der ein Kragen 62 besteht. Dieser Kragen 62 wird zwischen einer Unterkante 64 des Anschlusskörpers 15 und einem Sitz 66 in dem Anschluss 14 mittels der Überwurfmutter 28 geklemmt, so dass dadurch ebenfalls eine Abdichtung vorliegt (siehe Fig. 2 und 4).

Weiterhin besitzt der Drallkörper 33 drei Vorsprünge 68, die so angeordnet sind, dass sie in der Projektion entlang der Längserstreckung L einen Vollkreis überdecken, wobei zwischen zwei benachbarten Vorsprüngen 68 eine geringfügige Überlappung in der Projektion entlang der Längserstreckung vorliegt.

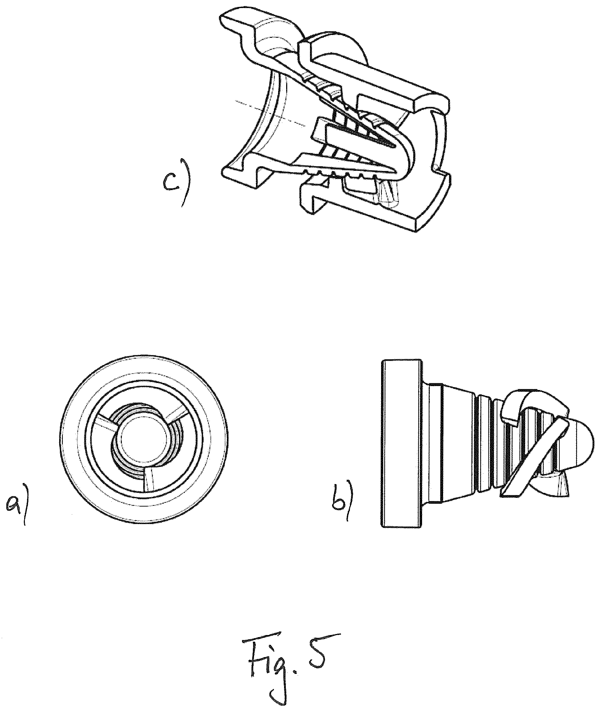

Diese Vorsprünge 68 sind so ausgebildet, dass sie sich im verbauten Zustand entsprechend Fig. 1 und Fig. 2 eng an die Kegelfläche 34 des Filterelements 32 anlegen und dieses verkeilen. Dazu weisen die Vorsprünge 68 in Richtung zur Spitze 40 des Filterelements 32 eine größere Höhe H auf als in Richtung zur Basisringfläche 36 (vgl. auch Fig. 5).

Außerdem weist der Drallkörper 33 zwei Vertiefungen 70 in seiner Wandung 60 auf, die in Zusammenspiel mit entsprechenden Vorsprüngen des Anschlusskörpers 15 als Verdrehsicherung dienen.

Wie am besten in Fig. 2 zu erkennen ist, wird durch die Ringbasisfläche 36 und die Kegelfläche 34 des Filterelements 32, den Kragen 62 des Drallkörpers 33 sowie die Außenwand 56 des Zuleitungsanschlusses 14 in dem Filterraum 58 ein Ringraum 72 gebildet. Dieser Ringraum 72 weist keinerlei Durchgangsöffnungen 52 auf, so dass über den geringen Spalt 74 zwischen Drallkörper 33 und der Kegelfläche 34 des Filterelements 32 zwar ein Zulauf, aber kein Ablauf in den Ringraum 72 besteht, dieser somit strömungstechnisch einen Totraum bildet, der allerdings durch Öffnen der Überwurfmutter 28 und Entnahme von Anschlusskörper 15, Drallkörper 33 und Filterelement 32 leicht gereinigt werden kann.

Außerdem sind auch im Bereich der Spitze 40 keine Durchgangsöffnungen 52 angeordnet, so dass die Spitze 40 optimal zur Aufteilung des über den Filterzulauf 24 in den Filterraum 58 eindringenden Axialstrahls in eine Spaltströmung dienen kann.

Die Funktionsweise der Filtervorrichtung 20 ist nun die folgende:
Flüssigkeit, die in einer Strömungsrichtung entlang der Längserstreckung vom Filterzulauf 24 zum Filterablauf 26 fließt, tritt in den Filterraum 58 im Bereich der Spitze 40 des Filterelements 32 ein und wird ab der Spitze 40 des Filterelements 32 in eine Spaltströmung überführt. Die Bestandteile der Spaltströmung treffen nun auf die Vorsprünge 68 und werden von diesen von einer Abwärtsströmung entlang der Kegelfläche 34 in eine Strömung gezwungen, die sich um die Kegelfläche 34 spiralförmig herum windet. Dies wird dadurch unterstützt, dass die Vorsprünge 68 einen Vollkreis umschließen und außerdem dichtend zwischen Wandung 60 und Kegelfläche 34 liegen.

Dadurch verbleibt die Flüssigkeit länger im Filterraum 58. Außerdem werden Zentrifugalkräfte erzeugt, die sich auf die in der Flüssigkeit befindlichen Verschmutzungspartikel so auswirken, dass diese nach außen, von der Kegelfläche 34 weg in Richtung zur Wandung 60 des Drallkörpers 33 abgelenkt werden. Diese Verschmutzungspartikel fallen im weiteren Verlauf in den Totraum 72, wo sie fast keiner Strömung mehr ausgesetzt sind und sich dadurch dort ablagern können.

Diese Wirkungen führen zu einer hydraulischen Filterung der Flüssigkeit.

Eine rein mechanische Filterung der Flüssigkeit wird durch die Durchgangsöffnungen 52 bewirkt, die Verschmutzungspartikel bestimmter Größe nicht hindurchlassen. Die Verstopfung dieser Durchgangsöffnungen 52 wird dadurch verhindert, dass diese nicht normal zu der auftreffenden Strömung liegen, sondern versetzt dazu, weshalb sich oberhalb der Durchgangsöffnungen 52 ansammelnde Verschmutzungspartikel durch die Strömung immer wieder mitgerissen und in den Totraum 72 überführt werden können.

Der Totraum 72 weist in Bezug auf die Längserstreckung L eine axiale Höhe von ca. 7 mm und eine radiale Breite von ca. 4 mm auf. Der Ringspalt 74 zwischen Kegelfläche 34 und Wandung 60 beträgt im Bereich der Spitze am Beginn der Durchgangsöffnungen 52 ca. 8 mm und im Bereich des Kragens 62 am Ende der Durchgangsöffnungen 52 ca. 1 mm. Der Totraum 72 weist dabei ein Volumen von ca. 1.300 mm3 auf. Dadurch besteht eine große Aufnahmefähigkeit für Verschmutzungspartikel, so dass die Filtervorrichtung 20 relativ lang wartungsfrei ist, verglichen mit üblichen Filtervorrichtungen bei identischen Verschmutzungsgrad der zu filternden Flüssigkeit. Die angegebenen Breiten sind radiale Breiten, also in Bezug auf die Mittelachse des Filterelements 32 nur einseitig gemessen.

Die Kegelfläche 34 weist in Bezug auf die Längserstreckung L einen Winkel von 15° auf, wodurch einerseits ein gutes Führungsvermögen durch Vermeidung von Strömungsabrissen für die Strömung besteht und andererseits das Filterelement 32 nicht zu lang baut, so dass der Bauraum gering gehalten werden kann.

Dadurch, dass die Durchgangsöffnungen 52 auf der Kegelfläche 34 angeordnet sind, besteht in Bezug auf den Filterablauf 26 eine relativ große Durchgangsfläche für die Flüssigkeit durch das Filterelement 32, so dass über die Filtervorrichtung 10 kein bzw. kein wesentlicher Druckverlust erzeugt wird.

Außerdem können je nach Bedarf unterschiedliche Filterelemente 32 und Drallkörper 33 eingesetzt werden, um die hydraulische Filterwirkung, die mechanische Filterwirkung und den Druckverlust gezielt einzustellen.

Weiterhin könnte auch ein hinsichtlich der Durchgangsfläche variables Filterelement (nicht gezeigt) zum Einsatz kommen, bei dem beispielsweise eine zweite Kegelfläche im Inneren der Kegelfläche 34 eingesetzt wäre, die ebenfalls Durchgangsöffnungen aufwiese, die mit den Durchgangsöffnungen 52 in Deckung bringbar sind. Durch Verdrehen der beiden Kegelflächen gegeneinander, würden die Rippen 50 Durchgangsöffnungen (teilweise) verdecken, wodurch die Durchgangsfläche kontinuierlich verringerbar wäre.

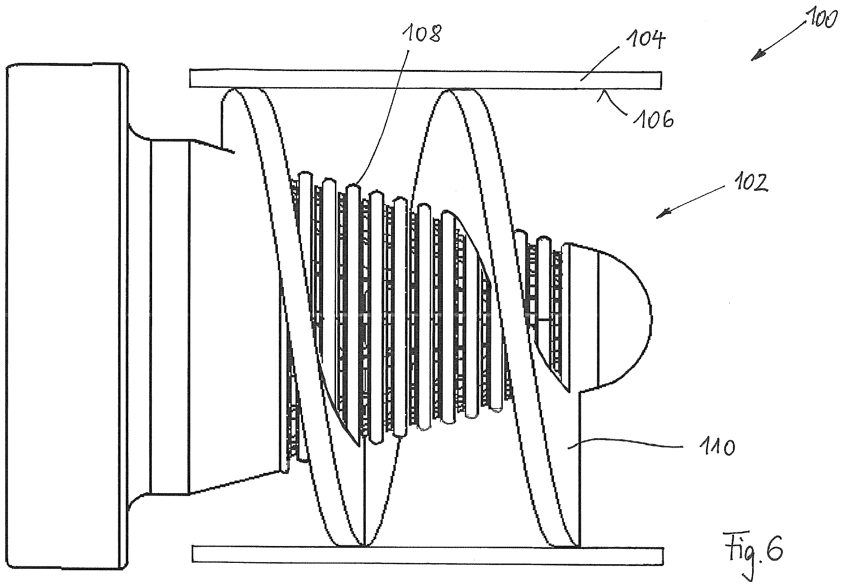

Anstelle der erfindungsgemäßen Filtervorrichtung 20 gemäß der ersten bevorzugten Ausgestaltung könnte die Filtervorrichtung 100 auch gemäß einer zweiten bevorzugten Ausgestaltung ausgebildet sein, die anhand der Fig. 6 näher erläutert werden soll.

Diese Ausgestaltung unterscheidet sich von der Filtervorrichtung 20 nur durch den Aufbau des Filterelements 102 und des Drallkörpers 104. Hier weist der Drallkörper 104 eine glatte zylindrische Wandung 106 auf und auf der Kegelfläche 108 des Filterelements 102 besteht ein durchgehender Vorsprung 110, der wiederum einen Vollkreis überdeckt und in seiner Höhe sukzessive so angepasst ist, dass er im eingebauten Zustand dicht an der Wandung 106 anliegt. Die Wirkungen dieser Filtervorrichtung 100 sind identisch, so dass darauf nicht noch einmal eingegangen wird.

Natürlich können auch andere Konfigurationen von Vorsprüngen eingesetzt werden, wie ein einzelner Vorsprung am Drallkörper, mehrere Vorsprünge am Filterelement oder ein oder mehrere Vorsprünge am Drallkörper, die mit ein oder mehreren Vorsprüngen am Filterelement kombiniert sind.

Aus der vorstehenden Darstellung ist deutlich geworden, dass mit der vorliegenden Erfindung eine Lösung geschaffen ist, die dahingehend Verbesserungen bringt, dass die Filtervorrichtung 20, 102 eine sehr hohe Wartungsfreundlichkeit bei langer Wartungsfreiheit aufweist. Die Filterwirkung ist ausgezeichnet, ohne dass die Filterwirkung allzu schnell nachlässt. Dabei stellt die Filtervorrichtung 20, 102 einem Flüssigkeitsstrom nur wenig Widerstand entgegen und sowohl die Filterwirkung als auch der Strömungswiderstand können gezielt eingestellt werden.

Dabei ist insgesamt festzustellen, dass die kombinatorische Wirkung der Erzeugung einer Strömung mit Umfangsströmungsanteilen, wodurch eine Art Hydrozyklon (Erzeugung einer Zentrifugalbeschleunigung als Triebkraft für einen Trennprozess, der auf verschiedenen Dichten basiert) bewirkt wird, und die Verhinderung eines Flüssigkeitsdurchtritts direkt in Axialrichtung durch das Filterelement 32 besonders vorteilhaft ist. Dadurch wird die Strömung nämlich gezwungen, das Filterelement 32 parallel anzuströmen, wodurch ein sehr effizienter Selbstreinigungseffekt des Filterelements 32 besteht. Wenn zusätzlich noch ein Totraum 72 bereitgestellt wird, werden Verschmutzungen sehr wirksam aus der zu filternden Strömung ausgetragen.

Die jetzt mit der Anmeldung und auch die später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist somit von der Offenbarung dieser Anmeldung abgedeckt.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden, beziehungsweise im Zusammenhang mit anderen Merkmalen besonders günstige Ergebnisse erreichen.

Somit können alle in der allgemeinen Beschreibung der Erfindung, der Beschreibung der Ausführungsbeispiele, den nachfolgenden Ansprüchen und in den Figuren dargestellten Merkmale sowohl einzeln als auch in beliebiger Kombination miteinander erfindungswesentlich sein. Diese Merkmale bzw. Merkmalskombinationen können jeweils eine selbständige Erfindung begründen, deren Inanspruchnahme sich ausdrücklich vorbehalten wird. Dabei müssen einzelne Merkmale aus der Beschreibung eines Ausführungsbeispiels nicht zwingend mit ein oder mehreren oder allen anderen in der Beschreibung dieses Ausführungsbeispiels angegebenen Merkmale kombiniert werden, diesbezüglich ist jede Unterkombination ausdrücklich mit offenbart. Außerdem können gegenständliche Merkmale einer Vorrichtung umformuliert auch als Verfahrensmerkmale Verwendung finden und Verfahrensmerkmale können umformuliert als gegenständliche Merkmale einer Vorrichtung Verwendung finden. Eine solche Umformulierung ist somit automatisch mit offenbart.

### Bezugszeichenliste

- 10: erste bevorzugte Ausgestaltung des erfindungsgemäßen Füllventils
- 12: Gehäuse
- 14: Zuleitungsanschluss
- 15: Anschlusskörper
- 16: Schwimmkörper
- 18: Füllrohr 18
- 20: erste bevorzugte Ausgestaltung der erfindungsgemäßen Filtervorrichtung
- 22: Filtergehäuse
- 24: Filterzulauf
- 26: Filterablauf
- 28: Überwurfmutter
- 30: Gummidichtung, O-Ring
- 32: Filterelement, Mittel zur Strömungsbeeinflussung
- 33: Drallkörper, Mittel zur Strömungsbeeinflussung
- 34: Kegelfläche
- 36: Basisringfläche
- 38: Kragen
- 40: Spitze der Kegelfläche
- 42: Stabelement
- 44: Außenseite der Kegelfläche 34
- 46: Nuten
- 48: Innenseite der Kegelfläche 34
- 50: Rippen
- 52: Durchgangsöffnungen, Durchbrechungen
- 54: Filtersitz
- 56: Außenwand des Zuleitungsanschlusses 14
- 58: Filterraum
- 60: zylindrische Wandung
- 62: Kragen
- 64: Unterkante des Anschlusskörpers 15
- 66: Sitz
- 68: Vorsprünge
- 70: Vertiefungen
- 72: Ringraum, Totraum
- 74: Spalt zwischen Drallkörper 33 und Kegelfläche 34
- 100: zweite bevorzugte Ausgestaltung der erfindungsgemäßen Filtervorrichtung
- 102: Filterelement
- 104: Drallkörper
- 106: glatte zylindrische Wandung
- 108: Kegelfläche
- 110: durchgehender Vorsprung
- H: Höhe des Vorsprungs 68
- L: Längserstreckung des Filtergehäuses
- LF: Längserstreckung des Filterelements 32
- S: Strahl parallel zur Längserstreckung LF des Filterelements 32

## Patentansprüche

1. Vorrichtung (20; 102) zur Filterung von Flüssigkeiten, insbesondere in Füllventilen (10; 100), mit einem Filterraum (58), der einen Filterzulauf (24), einen Filterablauf (26), eine zwischen Filterzulauf (24) und Filterablauf (26) angeordnete Wandung (60) des Filterraumes (58) und eine Längserstreckung (L) aufweist, wobei ein Filterelement (32; 102) mit zumindest einer Durchgangsöffnung (52) für eine zu filternde Flüssigkeit besteht, das in Strömungsrichtung zwischen Filterzulauf (24) und Filterablauf (26) in dem Filterraum (58) angeordnet ist, **dadurch gekennzeichnet, dass** in Bezug auf die Längserstreckung (L) des Filterraumes (58) ein Bereich (72) des Filterraumes (58) besteht, der zwischen der Wandung (60) des Filterraumes (58) und dem Filterelement (32) angeordnet ist und der keine Durchgangsöffnungen (52) aufweist, wobei in dem Filterraum (58) Mittel (32, 34; 102, 104) zur Strömungsbeeinflussung bestehen, die angepasst sind, die Flüssigkeit in Bezug auf die Längserstreckung (L) des Filterraumes (58) nach außen abzulenken, so dass Schmutzpartikel durch die entstehenden Zentrifugalkräfte nach außen in Richtung zu der Wandung (60) des Filterraumes (58) abgelenkt werden, so dass sich die Schmutzpartikel in dem Bereich (72) ansammeln.

2. Vorrichtung (20; 102) nach Anspruch 1, **dadurch gekennzeichnet, dass** das Filterelement (32; 102) in Bezug auf die Längserstreckung (L) gewölbt, bevorzugt konisch gewölbt, insbesondere als Kegel oder Kegelstumpf ausgebildet ist, wobei vorzugsweise
i) die Wölbung in Richtung zum Filterzulauf (24) verläuft und/oder
ii) das Filterelement (32; 102) in Bezug auf die Längserstreckung (L) einen Winkel im Bereich 5° bis 20°, bevorzugt 10° bis 17° und insbesondere von 15° aufweist.

3. Vorrichtung (20; 102) nach Anspruch 1 oder Anspruch 2, **dadurch gekennzeichnet, dass** das Filterelement (32; 102) eine Zulaufseite und eine Ablaufseite aufweist und an der Ablaufseite ein Strahlführungselement, bevorzugt ein Stab (42) angeordnet ist, wobei sich das Strahlführungselement (42) vorzugsweise im Inneren des Filterelements (32) von einer Spitze (40) des Filterelements (32) in Richtung zu dem Filterablauf (26) erstreckt.

4. Vorrichtung (20; 102) nach einem der vorherigen Ansprüche, **dadurch gekennzeichnet, dass** das Filterelement (32; 102) zumindest eine Durchgangsöffnung (52) aufweist, die so ausgerichtet ist, dass sie nicht parallel zur Längserstreckung (L) des Filterraumes (58) verläuft, wobei die Durchgangsöffnung (52) bevorzugt so ausgebildet ist, dass kein Strahl (S) parallel zur Längserstreckung (L) durch diese Durchgangsöffnung (52) hindurchtreten kann ohne auf eine Wandung (34) des Filterelements (32; 102) zu treffen.

5. Vorrichtung (20; 102) nach einem der vorherigen Ansprüche, **dadurch gekennzeichnet, dass** die Summe der Querschnittsflächen der Durchgangsöffnungen (52) des Filterelements (32; 102) zumindest gleich, bevorzugt größer ist als die Querschnittsfläche des Filterzulaufs (24).

6. Vorrichtung nach einem der vorherigen Ansprüche, **dadurch gekennzeichnet, dass** das Filterelement zumindest eine in seiner Dimension anpassbare Durchgangsöffnung aufweist, wobei das Filterelement bevorzugt, zwei gegeneinander verlagerbare Teile aufweist, die jeweils eine Durchgangsöffnung aufweisen, wobei eine Verlagerung der Teile gegeneinander zu einer Verlagerung der Position der Durchgangsöffnungen der Teile zueinander führt.

7. Vorrichtung (20; 102) nach einem der vorherigen Ansprüche, **dadurch gekennzeichnet, dass** die Durchgangsöffnungen (52) des Filterelements (32; 102) in einem ersten minimalen Abstand von der Wandung (60) des Filterraumes (58) und/oder in einem zweiten minimalen Abstand von dem Filterablauf (26) angeordnet sind, wobei der erste minimale Abstand und/oder der zweite minimale Abstand bevorzugt zumindest 3 mm, vorzugsweise zumindest 5 mm, insbesondere zumindest 10 mm beträgt.

8. Vorrichtung (20; 102) nach einem der vorherigen Ansprüche, **dadurch gekennzeichnet, dass** in Bezug auf die Längserstreckung (L) des Filterraumes (58) ein Bereich (72) des Filterraumes (58) besteht,
der in Bezug auf die Strömungsrichtung als Totraum (72) ausgebildet ist, wobei der Totraum (72) vorzugsweise ein Volumen von zumindest 700 mm3, bevorzugt von zumindest 1.000 mm3, insbesondere von zumindest 1.200 mm3 aufweist, und/oder
der als Vertiefung ohne Durchgangsöffnungen (52) ausgebildet ist und/oder
der als Ringraum (72) oder Ringspalt ohne Durchgangsöffnungen (52) ausgebildet ist, wobei der Ringraum (72) oder Ringspalt bevorzugt zumindest bereichsweise in Bezug auf eine Richtung quer zur Längserstreckung (L) des Filterraumes (58) außerhalb des Querschnitts des Filterablaufs (26) angeordnet ist, und/oder
der eine Eintrittsöffnung (74) aufweist, die einen geringeren Querschnitt aufweist als in Bezug auf die Längserstreckung (L) hinter der Eintrittsöffnung (74) liegende Abschnitte (72) des Bereichs, und/oder
der eine Eintrittsöffnung (74) aufweist, wobei sich in Längserstreckung (L) die Querschnittsfläche des Bereichs (72) in Bezug auf die Querschnittsfläche der Eintrittsöffnung (72) erweitert.

9. Vorrichtung (20; 102) nach Anspruch 8, **dadurch gekennzeichnet,**
**dass** der Bereich (72) in Längserstreckung (L) des Filterraumes (58) eine Tiefe von zumindest 3 mm, vorzugsweise von zumindest 5 mm, insbesondere von zumindest 10 mm aufweist, und/oder
**dass** der Bereich (72) quer zur Längserstreckung (L) des Filterraumes (58) eine Breite von zumindest 3 mm, vorzugsweise von zumindest 5 mm, insbesondere von zumindest 10 mm aufweist, und/oder
**dass** die Eintrittsöffnung (74) des Bereichs (72) eine Breite von höchstens 6 mm, bevorzugt von höchstens 3 mm, insbesondere von höchstens 1 mm aufweist.

10. Vorrichtung (20; 102) nach einem der vorherigen Ansprüche, **dadurch gekennzeichnet, dass** die Mittel (32, 34; 102, 104) zur Strömungsrichtungsbeeinflussung angepasst sind, eine Axialströmung zumindest teilweise in eine Umfangsströmung umzuformen.

11. Vorrichtung (20; 102) nach einem der vorherigen Ansprüche, **dadurch gekennzeichnet, dass** die Mittel (32, 34; 102, 104) zur Strömungsbeeinflussung zumindest einen Vorsprung (68; 110) umfassen,
der in Bezug auf die Längserstreckung (L) des Filterraumes (58) zumindest bereichsweise gewunden ausgebildet ist und/oder
der sich mit seiner Höhe (H) zwischen Filterelement (32; 102) und Wandung (60; 106) des Filterraumes (58) erstreckt, bevorzugt bis auf fertigungsbedingte Toleranzen sowohl an Wandung (60) des Filterraumes (58) als auch dem Filterelement (32; 102) anliegt und/oder
der fest mit der Wandung (60) und/oder fest mit dem Filterelement (102) verbunden ist.

12. Vorrichtung (20; 102) nach Anspruch 11, **dadurch gekennzeichnet,**
**dass** der zumindest eine Vorsprung (68; 110) ggf. in Zusammenwirkung mit weiteren Vorsprüngen (68) so angeordnet ist, dass keine direkte Strömung in Richtung der Längserstreckung (L) des Filterraumes (58) möglich ist, sondern die gesamte Strömung in Bezug auf die Längserstreckung (L) einen Drall erfährt, und/oder
**dass** der zumindest eine Vorsprung (68; 110) so angeordnet ist, dass er sich in Bezug auf die Längserstreckung (L) des Filterraumes (58) nicht über die gesamte Tiefe des Bereichs (72) nach Anspruch 8 erstreckt, bevorzugt sich nicht in den Bereich (72) nach Anspruch 8 hinein erstreckt.

13. Verfahren zur Filterung von Flüssigkeiten, insbesondere in Füllventilen (10), wobei ein Filterraum (58) verwendet wird, der einen Filterzulauf (24), einen Filterablauf (26), eine zwischen Filterzulauf (24) und Filterablauf (26) angeordnete Wandung des Filterraumes (58) und eine Längserstreckung (L) aufweist, wobei ein Filterelement (32; 102) mit zumindest einer Durchgangsöffnung (52) für eine zu filternde Flüssigkeit verwendet wird, das in Strömungsrichtung zwischen Filterzulauf (24) und Filterablauf (26) in dem Filterraum (58) angeordnet ist, **dadurch gekennzeichnet, dass** in Bezug auf die Längserstreckung (L) des Filterraumes (58) ein Bereich (72) des Filterraumes (58) besteht, der zwischen der Wandung (60) des Filterraumes (58) und dem Filterelement (32) angeordnet ist und der keine Durchgangsöffnungen (52) aufweist, wobei Mittel (32, 34; 102, 104) zur Strömungsbeeinflussung in dem Filterraum (58) verwendet werden, die angepasst sind, die Flüssigkeit in Bezug auf die Längserstreckung (L) des Filterraumes (58) nach außen abzulenken, so dass Schmutzpartikel durch die entstehenden Zentrifugalkräfte nach außen in Richtung zu der Wandung (60) des Filterraumes (58) abgelenkt werden, so dass sich die Schmutzpartikel in dem Bereich (72) ansammeln.

14. Verfahren nach Anspruch 13, **dadurch gekennzeichnet, dass** die Vorrichtung (20; 102) nach einem der Ansprüche 2 bis 12 verwendet wird.

15. Verwendung einer Vorrichtung (20; 102) nach einem der Ansprüche 1 bis 12 im Rahmen einer Flüssigkeitsführenden Leitung, bevorzugt im Rahmen eines Füllventils (10; 100), insbesondere im Rahmen eines Spülkastens mit einem Füllventil (10; 100).

## Claims

1. Device (20; 102) for filtering liquids, in particular in filling valves (10; 100), having a filter chamber (58) having a filter inlet (24), a filter outlet (26), a wall (60) of the filter chamber (58) arranged between the filter inlet (24) and the filter outlet (26), and a longitudinal extent (L), wherein there is a filter element (32; 102) with at least one through-opening (52) for a liquid to be filtered, which is arranged in the direction of flow between the filter inlet (24) and the filter outlet (26) in the filter chamber (58), **characterised in that** a region (72) of the filter chamber (58) exists in relation to the longitudinal extent (L) of the filter chamber (58), which is arranged between the wall (60) of the filter chamber (58) and the filter element (32) and which has no through-openings (52), wherein there are means (32, 34; 102, 104) in the filter chamber (58) for influencing the flow, which means are adapted to deflect the liquid outwards in relation to the longitudinal extent (L) of the filter chamber (58), so that dirt particles are deflected outwards toward the wall (60) of the filter chamber (58) by the resulting centrifugal forces, so that the dirt particles accumulate in the region (72).

2. Device (20; 102) according to claim 1, **characterised in that** the filter element (32; 102) is curved in relation to the longitudinal extent (L), preferably conically curved, in particular in the form of a cone or truncated cone, wherein preferably
i) the curve runs in the direction of the filter inlet (24) and/or
ii) the filter element (32; 102) has an angle in the range of 5° to 20°, preferably 10° to 17° and in particular 15°, in relation to the longitudinal extent (L).

3. Device (20; 102) according to claim 1 or claim 2, **characterised in that** the filter element (32; 102) has an inlet side and an outlet side and a jet guide element, preferably a rod (42), is arranged on the outlet side, wherein the jet guide element (42) preferably extends inside the filter element (32) from a tip (40) of the filter element (32) towards the filter outlet (26).

4. Device (20; 102) according to any one of the preceding claims, **characterised in that** the filter element (32; 102) has at least one through-opening (52) that is oriented such that it does not extend parallel to the longitudinal extent (L) of the filter chamber (58), wherein the through-opening (52) is preferably designed such that no jet (S) can pass through this through-opening (52) parallel to the longitudinal extent (L) without striking a wall (34) of the filter element (32; 102).

5. Device (20; 102) according to any one of the preceding claims, **characterised in that** the sum of the cross-sectional areas of the through-openings (52) of the filter element (32; 102) is at least equal to, preferably greater than, the cross-sectional area of the filter inlet (24).

6. Device according to any one of the preceding claims, **characterised in that** the filter element has at least one through-opening, the dimensions of which can be adjusted, wherein the filter element preferably has two parts that can be moved against each other, which each have a through-opening, wherein a displacement of the parts relative to each other leads to a displacement of the position of the through-openings of the parts relative to each other.

7. Device (20; 102) according to any one of the preceding claims, **characterised in that** the through-openings (52) of the filter element (32; 102) are arranged at a first minimum distance from the wall (60) of the filter chamber (58) and/or at a second minimum distance from the filter outlet (26), wherein the first minimum distance and/or the second minimum distance is preferably at least 3 mm, preferably at least 5 mm, in particular at least 10 mm.

8. Device (20; 102) according to any one of the preceding claims, **characterised in that** a region (72) of the filter chamber (58) exists in relation to the longitudinal extent (L) of the filter chamber (58),
which is formed as a dead space (72) in relation to the direction of flow, wherein the dead space (72) preferably has a volume of at least 700 mm³, preferably of at least 1,000 mm³, in particular of at least 1,200 mm³, and/or
which is designed as a recess without through-openings (52), and/or
which is formed as an annular space (72) or annular gap without through-openings (52), wherein the annular space (72) or annular gap is preferably arranged outside the cross-section of the filter outlet (26) at least in some regions in relation to a direction transverse to the longitudinal extent (L) of the filter space (58), and/or
which has an inlet opening (74) that has a smaller cross-section than sections (72) of the region lying behind the inlet opening (74) in relation to the longitudinal extent (L), and/or
which has an inlet opening (74), wherein the cross-sectional area of the region (72) widens in longitudinal extent (L) in relation to the cross-sectional area of the inlet opening (72).

9. Device (20; 102) according to claim 8, **characterised in that**
the region (72) has a depth of at least 3 mm, preferably of at least 5 mm, in particular of at least 10 mm, in the longitudinal extent (L) of the filter chamber (58), and/or
the region (72) has a width of at least 3 mm, preferably of at least 5 mm, in particular of at least 10 mm, transversely to the longitudinal extent (L) of the filter chamber (58), and/or
the inlet opening (74) of the region (72) has a width of at most 6 mm, preferably of at most 3 mm, in particular of at most 1 mm.

10. Device (20; 102) according to any one of the preceding claims, **characterised in that** the means (32, 34; 102, 104) for influencing the direction of flow are adapted to at least partially transform an axial flow into a circumferential flow.

11. Device (20; 102) according to any one of the preceding claims, **characterised in that** the means (32, 34; 102, 104) for influencing the flow comprise at least one projection (68; 110),
which is designed to be curved in relation to the longitudinal extent (L) of the filter chamber (58), at least in certain regions, and/or
which extends with its height (H) between the filter element (32; 102) and the wall (60; 106) of the filter chamber (58), preferably abutting both the wall (60) of the filter chamber (58) and the filter element (32; 102) up to production-related tolerances, and/or
which is firmly connected to the wall (60) and/or firmly connected to the filter element (102).

12. Device (20; 102) according to claim 11, **characterised in that**
the at least one projection (68; 110) is arranged, possibly in co-operation with further projections (68), in such a way that no direct flow in the direction of the longitudinal extent (L) of the filter chamber (58) is possible, but the entire flow experiences a swirl in relation to the longitudinal extent (L), and/or
the at least one projection (68; 110) is arranged such that it does not extend over the entire depth of the region (72) according to claim 8 in relation to the longitudinal extent (L) of the filter chamber (58), preferably not extending into the region (72) according to claim 8.

13. Method for filtering liquids, in particular in filling valves (10), wherein a filter chamber (58) is used having a filter inlet (24), a filter outlet (26), a wall of the filter chamber (58) arranged between the filter inlet (24) and the filter outlet (26), and a longitudinal extent (L), wherein a filter element (32; 102) is used with at least one through-opening (52) for a liquid to be filtered, which is arranged in the direction of flow between the filter inlet (24) and the filter outlet (26) in the filter chamber (58), **characterised in that** a region (72) of the filter chamber (58) exists in relation to the longitudinal extent (L) of the filter chamber (58), which is arranged between the wall (60) of the filter chamber (58) and the filter element (32) and which has no through-openings (52), wherein means (32, 34; 102, 104) for influencing the flow are used in the filter chamber (58), which means are adapted to deflect the liquid outwards in relation to the longitudinal extent (L) of the filter chamber (58), so that dirt particles are deflected outwards toward the wall (60) of the filter chamber (58) by the resulting centrifugal forces, so that the dirt particles accumulate in the region (72).

14. Method according to claim 13, **characterised in that** the device (20; 102) according to any one of claims 2 to 12 is used.

15. Use of a device (20; 102) according to any one of claims 1 to 12 in the context of a liquid-conducting line, preferably in the context of a filling valve (10; 100), in particular in the context of a cistern with a filling valve (10; 100).

## Revendications

1. Dispositif (20 ; 102) pour filtrer des liquides, notamment dans des soupapes de remplissage (10 ; 100), avec une chambre de filtration (58) qui présente une arrivée de filtration (24), une évacuation de filtration (26), une paroi (60) de la chambre de filtration (58) agencée entre l'arrivée de filtration (24) et l'évacuation de filtration (26) et une extension longitudinale (L), il existant un élément filtrant (32 ; 102) avec au moins une ouverture de passage (52) pour un liquide à filtrer, lequel est agencé dans la chambre de filtration (58) dans la direction d'écoulement entre l'arrivée de filtration (24) et l'évacuation de filtration (26), **caractérisé en ce qu'**il existe, par rapport à l'extension longitudinale (L) de la chambre de filtration (58), une zone (72) de la chambre de filtration (58) qui est agencée entre la paroi (60) de la chambre de filtration (58) et l'élément filtrant (32) et qui ne présente aucune ouverture de passage (52), il existant dans la chambre de filtration (58) des moyens (32, 34 ; 102, 104) destinés à influencer l'écoulement, qui sont adaptés pour dévier le liquide vers l'extérieur par rapport à l'extension longitudinale (L) de la chambre de filtration (58), de telle sorte que les particules de saleté sont déviées vers l'extérieur en direction de la paroi (60) de la chambre de filtration (58) par les forces centrifuges qui en résultent, de telle sorte que les particules de saleté s'accumulent dans la zone (72).

2. Dispositif (20 ; 102) selon la revendication 1, **caractérisé en ce que** l'élément filtrant (32 ; 102) est bombé par rapport à l'extension longitudinale (L), de préférence bombé de manière conique, notamment réalisé sous forme de cône ou de tronc de cône, préférentiellement
i) le bombement s'étendant en direction de l'arrivée de filtration (24) et/ou
ii) l'élément filtrant (32 ; 102) présentant un angle dans la plage de 5° à 20°, de préférence de 10° à 17° et notamment de 15°, par rapport à l'extension longitudinale (L).

3. Dispositif (20 ; 102) selon la revendication 1 ou la revendication 2, **caractérisé en ce que** l'élément filtrant (32 ; 102) présente un côté d'arrivée et un côté d'évacuation et un élément de guidage de jet, de préférence une tige (42), est agencé sur le côté d'évacuation, l'élément de guidage de jet (42) s'étendant préférentiellement à l'intérieur de l'élément filtrant (32) depuis une pointe (40) de l'élément filtrant (32) en direction de l'évacuation de filtration (26).

4. Dispositif (20 ; 102) selon l'une quelconque des revendications précédentes, **caractérisé en ce que** l'élément filtrant (32 ; 102) présente au moins une ouverture de passage (52) qui est orientée de manière à ne pas s'étendre parallèlement à l'extension longitudinale (L) de la chambre de filtration (58), l'ouverture de passage (52) étant de préférence réalisée de telle sorte qu'aucun jet (S) parallèle à l'extension longitudinale (L) ne puisse passer à travers cette ouverture de passage (52) sans heurter une paroi (34) de l'élément filtrant (32 ; 102).

5. Dispositif (20 ; 102) selon l'une quelconque des revendications précédentes, **caractérisé en ce que** la somme des surfaces de section transversale des ouvertures de passage (52) de l'élément filtrant (32 ; 102) est au moins égale, de préférence supérieure, à la surface de section transversale de l'arrivée de filtration (24).

6. Dispositif selon l'une quelconque des revendications précédentes, **caractérisé en ce que** l'élément filtrant présente au moins une ouverture de passage dont les dimensions sont adaptables, l'élément filtrant présentant de préférence deux parties pouvant être déplacées l'une par rapport à l'autre, qui présentent chacune une ouverture de passage, un déplacement des parties l'une par rapport à l'autre entraînant un déplacement de la position des ouvertures de passage des parties l'une par rapport à l'autre.

7. Dispositif (20 ; 102) selon l'une quelconque des revendications précédentes, **caractérisé en ce que** les ouvertures de passage (52) de l'élément filtrant (32 ; 102) sont agencées à une première distance minimale de la paroi (60) de la chambre de filtration (58) et/ou à une deuxième distance minimale de l'évacuation de filtration (26), la première distance minimale et/ou la deuxième distance minimale étant de préférence d'au moins 3 mm, préférentiellement d'au moins 5 mm, notamment d'au moins 10 mm.

8. Dispositif (20 ; 102) selon l'une quelconque des revendications précédentes, **caractérisé en ce que**, par rapport à l'extension longitudinale (L) de la chambre de filtration (58), il existe une zone (72) de la chambre de filtration (58)
qui est réalisée sous forme d'espace mort (72) par rapport à la direction d'écoulement, l'espace mort (72) présentant préférentiellement un volume d'au moins 700 mm³, de préférence d'au moins 1 000 mm³, notamment d'au moins 1 200 mm³, et/ou
qui est réalisée sous forme de renfoncement sans ouvertures de passage (52) et/ou
qui est réalisée sous forme d'espace annulaire (72) ou d'interstice annulaire sans ouvertures de passage (52), l'espace annulaire (72) ou l'interstice annulaire étant de préférence agencé au moins par zones par rapport à une direction transversale à l'extension longitudinale (L) de la chambre de filtration (58) à l'extérieur de la section transversale de l'évacuation de filtration (26), et/ou
qui présente une ouverture d'entrée (74) qui présente une section transversale plus petite que les sections (72) de la zone situées derrière l'ouverture d'entrée (74) par rapport à l'extension longitudinale (L), et/ou
qui présente une ouverture d'entrée (74), la surface de section transversale de la zone (72) s'élargissant dans l'extension longitudinale (L) par rapport à la surface de section transversale de l'ouverture d'entrée (72).

9. Dispositif (20 ; 102) selon la revendication 8, **caractérisé**
**en ce que** la zone (72) présente, dans l'extension longitudinale (L) de la chambre de filtration (58), une profondeur d'au moins 3 mm, préférentiellement d'au moins 5 mm, notamment d'au moins 10 mm, et/ou
**en ce que** la zone (72) présente, transversalement à l'extension longitudinale (L) de la chambre de filtration (58), une largeur d'au moins 3 mm, préférentiellement d'au moins 5 mm, notamment d'au moins 10 mm, et/ou
**en ce que** l'ouverture d'entrée (74) de la zone (72) présente une largeur d'au plus 6 mm, de préférence d'au plus 3 mm, notamment d'au plus 1 mm.

10. Dispositif (20 ; 102) selon l'une quelconque des revendications précédentes, **caractérisé en ce que** les moyens (32, 34 ; 102, 104) destinés à influencer la direction d'écoulement sont adaptés pour transformer au moins partiellement un écoulement axial en un écoulement circonférentiel.

11. Dispositif (20 ; 102) selon l'une quelconque des revendications précédentes, **caractérisé en ce que** les moyens (32, 34 ; 102, 104) destinés à influencer l'écoulement comprennent au moins une saillie (68 ; 110)
qui est réalisée de manière sinueuse au moins par zones par rapport à l'extension longitudinale (L) de la chambre de filtration (58) et/ou
qui s'étend par sa hauteur (H) entre l'élément filtrant (32 ; 102) et la paroi (60 ; 106) de la chambre de filtration (58), s'applique de préférence, à l'exception des tolérances liées à la fabrication, à la fois contre la paroi (60) de la chambre de filtration (58) et contre l'élément filtrant (32 ; 102) et/ou
qui est reliée de manière fixe à la paroi (60) et/ou de manière fixe à l'élément filtrant (102).

12. Dispositif (20 ; 102) selon la revendication 11, **caractérisé**
**en ce que** l'au moins une saillie (68 ; 110), éventuellement en coopération avec d'autres saillies (68), est agencée de telle sorte qu'aucun écoulement direct dans la direction de l'extension longitudinale (L) de la chambre de filtration (58) n'est possible, mais que l'ensemble de l'écoulement subit une torsion par rapport à l'extension longitudinale (L), et/ou
**en ce que** l'au moins une saillie (68 ; 110) est agencée de telle sorte qu'elle ne s'étend pas sur toute la profondeur de la zone (72) selon la revendication 8 par rapport à l'extension longitudinale (L) de la chambre de filtration (58), de préférence qu'elle ne s'étend pas dans la zone (72) selon la revendication 8.

13. Procédé de filtration de liquides, notamment dans des soupapes de remplissage (10), une chambre de filtration (58) étant utilisée, qui présente une arrivée de filtration (24), une évacuation de filtration (26), une paroi de la chambre de filtration (58) agencée entre l'arrivée de filtration (24) et l'évacuation de filtration (26) et une extension longitudinale (L), un élément filtrant (32 ; 102) avec au moins une ouverture de passage (52) pour un liquide à filtrer étant utilisé, lequel est agencé dans la direction d'écoulement entre l'arrivée de filtration (24) et l'évacuation de filtration (26) dans la chambre de filtration (58), **caractérisé en ce qu'**il existe, par rapport à l'extension longitudinale (L) de la chambre de filtration (58), une zone (72) de la chambre de filtration (58) qui est agencée entre la paroi (60) de la chambre de filtration (58) et l'élément filtrant (32) et qui ne présente aucune ouverture de passage (52), des moyens (32, 34 ; 102, 104) pour influencer l'écoulement étant utilisés dans la chambre de filtration (58), qui sont adaptés pour dévier le liquide vers l'extérieur par rapport à l'extension longitudinale (L) de la chambre de filtration (58), de telle sorte que les particules de saleté sont déviées vers l'extérieur en direction de la paroi (60) de la chambre de filtration (58) par les forces centrifuges qui en résultent, de telle sorte que les particules de saleté s'accumulent dans la zone (72).

14. Procédé selon la revendication 13, **caractérisé en ce que** le dispositif (20 ; 102) selon l'une quelconque des revendications 2 à 12 est utilisé.

15. Utilisation d'un dispositif (20 ; 102) selon l'une quelconque des revendications 1 à 12 dans le cadre d'une conduite transportant un liquide, de préférence dans le cadre d'une soupape de remplissage (10 ; 100), notamment dans le cadre d'un réservoir de chasse d'eau avec une soupape de remplissage (10 ; 100).
